# EUROPEAN PATENT SPECIFICATION

(11) **EP 0 531 667 B1**
(45) Date of publication and mention of the grant of the patent: **07.02.1996**
(21) Application number: 92112172.9
(22) Date of filing: 16.07.1992
(51) Int. Cl.: B29D 31/00, B29C 70/52, B25G 1/10

(54) **Composite tool handle and method of making same**
Zusammengesetzter Griff und Verfahren zur Herstellung
Poignée composite et méthode de fabrication

(30) Priority: 18.07.1991 US 732042
(43) Date of publication of application: 17.03.1993
(73) Proprietor: Carmien, Joseph Allen, Sun Valley, CA 91352 (US)
(72) Inventor: Carmien, Joseph Allen, Sun Valley, CA 91352 (US)
(74) Representative: Ruschke, Hans Edvard, Dipl.-Ing.

(56) References cited:
- EP-A- 0 017 010
- US-A- 3 567 541
- US-A- 4 063 838
- US-A- 4 570 988

## Description

The present invention relates to a process for manufacturing composite tool handles and a composite tool handle having a construction which significantly increases the strength of such handles without an increase in weight.

In manufacturing a handle for a hand tool such as a shovel, competing design considerations are at play. On the one hand, it is desirable to have a handle that is as light as possible, to provide for easy use by consumers. On the other hand, the handle must have the structural integrity to withstand the variety of stresses that will be placed on it. Wooden handles have been used, but these provide an unacceptable compromise of weight for structural integrity or vice versa.

An alternative to wooden handles is the use of rods formed from resin coated fibers. The basic technique for running filaments through a resin bath and then into a long heated die tube to produce a cured composite of the same shape as the die tube has been known for some time. See, for example, U.S. Patent Nos. 2,948,649 and 3,556,888. This method, however, produces a solid extruded product which is unacceptably heavy and/or too rigid.

The weight problem can be alleviated by means of an existing process to extrude hollow tubes utilizing a die tube with the center filled, leaving an annular cross-section through which the fibers are pulled. This weight reduction is achieved, however, at the cost of significantly lower bending or flexural strength than that of a solid rod, and therefore would not be suitable for use in certain high-stress applications such as general purpose shovel handles.

Further, to increase interlaminar strength, a substantial percentage of fibers running other than in a longitudinal direction have been thought to be required.

The bending strength of tool handles can be improved by producing rods which are substantially hollow or lightweight throughout most of their length, but reinforced at areas of expected increased stresses.

Such improved tool handles and related methods are discussed in closest prior art reference U.S. Patent No. 4,570,988 to Carmien. It shows a reinforced tool handle of the preamble of claim 1 and method of manufacturing the same, in which a hollow fiberglass rod is produced with a solid section integrally-formed at predetermined stress points. The tool handle of this prior art reference is formed by alternately feeding sections of a light weight core and a relatively strong solid core into the center of a die tube. The alternate cores are uniformly surrounded by resin-coated fibers and pulled through the die tube to form a continuous rod having alternate light-weight and strong-solid cores. The continuous rod can then be cut as desired to form the reinforced tool handle of this prior art reference.

These composite tool handles have further been improved by the introduction of one or more reinforcing beads of fiber-resin material extending the length of the load-bearing rod. Such tool handles are shown in U.S. Patent No. 4,605,254.

EP 017 010 A2 does not suggest to provide a corrugated inner load-bearing core in combination with an equally corrugated cured fiber resin jacket. It discloses improving the tensile strength of the composite fiber material as discussed therein.

U.S. Patent 3,567,541 to Kaczerginski shows a method of winding laminated sections for use as electro-mechanical structural elements which will be used as insulators for electrical transmission networks. While these insulators do have some sections which are also provided with a corrugated surface, there is no indication whatsoever in this prior art reference that such corrugated surfaces could be helpful in improving the flexural strength of composite tool handles for garden-type tools.

U.S. Patent 4,063,838 to Michael describes a sucker rod for use in the production of oil wells. Again, increased flexural strength is not of issue in this prior art rod construction and method of forming the same.

Although such composite tool handles are far superior to wooden handles, the competitive pressures of the marketplace have encouraged tool handle manufacturers to seek new processes, materials and construction techniques to further strengthen composite tool handles without introducing additional weight and/or costs to the handle. In this regard it is important to use the most economical form of glass fibers and the most reasonably priced resins to produce a product that has the most value to the end user. However, common glass fibers and resins have physical properties less desirable when utilized in a composite tool handle than more exotic and costly fibers and resins would provide. Accordingly, an objective is to obtain higher mechanical strength properties from less costly materials when constructing composite tool handles.

It is well known that utilizing unidirectional strands of resin coated glass fibers in a pultrusion process is the most economical form of manufacturing a composite tool handle. Sometimes glass fibers such as a fabric mat veil have been introduced into the pultrusion process to reduce interlaminar failure or to increase the hoop strength of the handle by providing cross-fibers within the cured fiber-resin composite load-bearing jacket of the tool handle. The use of cross-fibers, however, typically increases the costs associated with manufacture of composite tool handles and decreases tensile strength of the handle along the length thereof. Thus, to increase interlaminar and hoop strength of the handle, some tensile and flexural strength is sacrificed.

Stress testing of composite tool handles has revealed several common characteristics of the tool handle as it fails under increasing loads. When a flexure load is applied perpendicularly to the longitudinal axis of a composite tool handle, the first failure usually occurs very close to the center of mass of the tool handle perpendicular to the applied load and extending longitudinally through the tool handle. This failure is in shear, between the fibers, of the resin. Following the initial shear failure of the resin through the center of mass of the tool handle, the handle is then separated into two relatively equal sections half which perform as independent units at half the overall load-bearing value of the original tool handle. As the load is increased, the next failure occurs as a compression failure in the bottom half of the original section of the tool handle. Composite tool handles are far stronger in tension (due to the strength characteristics of the fiber materials), whereas the compressive loads are borne almost entirely by the interfiber resinous material.

Accordingly, there has been a need for a composite tool handle and a related manufacturing process which provide significantly increased tensile and flexural strength without increasing the weight of the handle. Such a manufacturing process preferably permits use of low-cost fiber and resin materials, and utilizes unidirectional fibers in a pultrusion process. Additionally, there exists a need for a composite tool handle having increased interlaminar and hoop strength without the use of cross-fibers. Further, a composite tool handle and related manufactured process is needed which is compatible with prior techniques for localized strengthening of the load-bearing rod of the tool handle, as by, for example, the use of alternating sections of lightweight filler core and strong reinforcing core within the composite jacket, and the use of longitudinally extending reinforcing beads. Moreover, a novel composite tool handle and related manufacturing process is needed which greatly improves the handle's resistance to shear failure through the resin perpendicular to the applied load, as exhibited in prior composite tool handles. The novel composite tool handle fulfills these needs and provides other related advantages.

The above problems are solved by the present invention which resides in an improved novel composite tool handle as disclosed in claim 1. It has a construction which significantly increases the strength of the handle without an increase in weight. The tool handle comprises, generally, a core having a corrugated external surface, and a fiber-resin jacket formed around the core to securely position and hold the core within the jacket. An inner surface of the fiber-resin jacket conforms to the core external surface to key-lock the jacket to the core. This constructions helps to prevent failure of the composite handle under flexural loads by increasing the handle's resistance to shear failure through the resin between the fibers.

In a preferred form, the core includes a lightweight filler section and a relatively strong reinforcing section. The lightweight and reinforcing sections of the core extend alternately longitudinally along the length of the tool handle. The reinforcing section is located at a portion of the handle that is intended to withstand greater stress than the remainder of the handle.

The fiber-resin jacket includes a corrugated external surface along at least a portion of its length. A secondary jacket is molded to the fiber-resin jacket over the corrugated external surface such that the inner surface of the secondary jacket conforms to the corrugated external surface of the fiber-resin jacket to key-lock the secondary jacket to the fiber-resin jacket. The secondary jacket includes a reinforcing tip molded onto the fiber-resin jacket to strengthen the handle at its attachment to a tool head, and a grip molded onto the fiber-resin jacket adjacent to the reinforcing tip and extending rearwardly therefrom. The corrugations of the core and the external surface of the fiber-resin jacket preferably have a sinusoidal configuration. As such, each corrugation is about 0,762 mm (0.030 inch) deep and about 28,58 mm (1.125 inch) long.

A handle may include a load-bearing rod having a fiber-resin jacket comprising a corrugated external surface along at least a portion of its length, and a secondary jacket molded to the fiber-resin jacket over the corrugated portion thereof. An inner surface of the secondary jacket conforms to the corrugated external surface of the fiber-resin jacket to key-lock the secondary jacket to the rod.

The present invention also resides in a process for manufacturing a composite tool handle as disclosed in claim 7.

In a preferred form of the manufacturing process, sections of lightweight filler core and relatively strong reinforcing core are alternately fed into the die tube. Each section of core may be provided with corrugations having a sinusoidal configuration, wherein each corrugation is about 0.762 mm (0.030 inch) deep and about 28.58 mm (1.125 inch) long.

As the resin coated fibers are cured about the core, additional corrugations are formed on an external surface of the fiber-resin jacket along at least a portion of its length. A secondary jacket is then molded onto the fiber-resin jacket over the corrugations thereof such that an inner surface of the secondary jacket conforms to the corrugated external surface of the fiber-resin jacket to key-lock the secondary jacket to the fiber-resin jacket. The secondary jacket includes a reinforcing tip molded onto the fiber-resin jacket to strengthen the handle at its attachment to a tool head, and a grip molded onto the fiber-resin jacket adjacent to the reinforcing tip and extending rearwardly therefrom.

The corrugations of the external surface of the fiber-resin jacket may be formed by feeding a contoured plug into the pultrusion die tube with the resin coated fibers. The contoured plug preferably comprises a continuous mold insert belt having a corrugated internal surface to which the resin coated fibers conform during the curing step.

Alternatively, the manufacturing process can be characterized as including the steps of feeding a core into a pultrusion die tube while surrounding the core with resin coated fibers, and pulling the core through the pultrusion die tube while keeping the core surrounded by the resin coated fibers. The resin coated fibers are then cured around the core to form a fiber-resin jacket having a corrugated external surface. A secondary jacket is then molded onto the fiber-resin jacket over the corrugations thereof such that an inner surface of the secondary jacket conforms to the corrugated external surface of the fiber-resin jacket to key-lock the secondary jacket to the fiber-resin jacket.

Other features and advantages of the present invention will become apparent from the following more detailed description, taken in conjunction with the accompanying drawings which illustrate, by way of example the principles of the invention.

### BRIEF DESCRIPTION OF THE DRAWINGS

The accompanying drawings illustrate the invention. In such drawings:
FIGURE 1 is a perspective view of a shovel having a handle manufactured in accordance with the present invention;

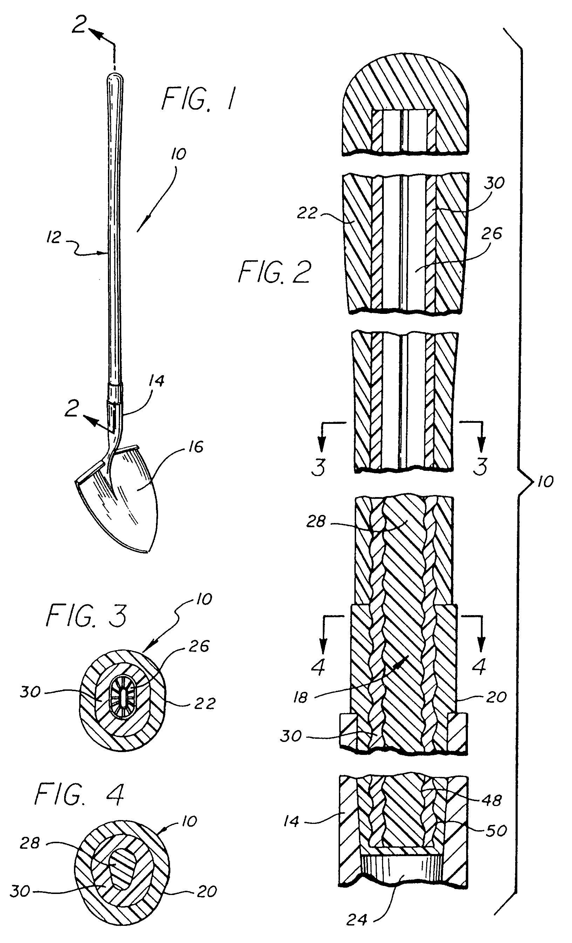

FIGURE 2 is an enlarged, fragmented sectional view taken generally along the line 2-2 of FIG. 1, illustrating construction of a handle manufactured in accordance with the present invention, including alternating sections of a lightweight filler core and a reinforcing core surrounded by a fiber-resin jacket, wherein the cores and the fiber-resin jacket have been key-locked together during a pultrusion manufacturing process, and further illustrating placement of a reinforcing tip over an end of the fiber-resin jacket, which is inserted into a socket of the shovel blade, and a grip extending upwardly from the reinforcing tip;
FIGURE 3 is a horizontal section taken generally along the line 3-3 of FIG. 2;
FIGURE 4 is a horizontal section taken generally along the line 4-4 of FIG. 2;
FIGURE 5 is a schematic representation of a pultrusion machine adapted to perform the manufacturing process of the present invention; and
FIGURE 6 is an enlarged fragmented and partially sectional view of the area indicated by the line 6-6 in FIG. 5, showing the manner in which a continuous belt is utilized to create sinusoidal corrugations on an exterior surface of the fiber-resin jacket.

### DETAILED DESCRIPTION OF THE PREFERRED EMBODIMENT

As shown in the drawings for purposes of illustration, the present invention is concerned with a novel composite tool handle, generally designated in the accompanying drawings by the reference number 10. The tool handle 10 comprises a component of a shovel 12 when inserted into a socket 14 of a shovel blade 16. The tool handle 10 of the present invention exhibits superior flexural strength in comparison with wooden handles and prior fiber-resin composite tool handles, without increasing the weight of the handle itself.

In accordance with the present invention, and as illustrated with respect to an exemplary shovel handle in FIGS. 1-4, the tool handle 10 comprises a load-bearing rod 18 having molded thereon a reinforcing tip 20 at a front end thereof, and a grip 22 situated adjacent to the reinforcing tip and extending rearwardly over the remainder of the load-bearing rod. The reinforcing tip 20 and the grip 22 generally ensheathe the load-bearing rod 18. The reinforcing tip 20 is configured for insertion into the socket 14 of the shovel blade 16, and is secured therein by any suitable conventional means. A socket filler 24, such as that shown and described in U.S. Patent No. Re. 32,364, extends from the, front end of the reinforcing tip 20 into the shovel socket 14 to prevent compressive failure of the socket.

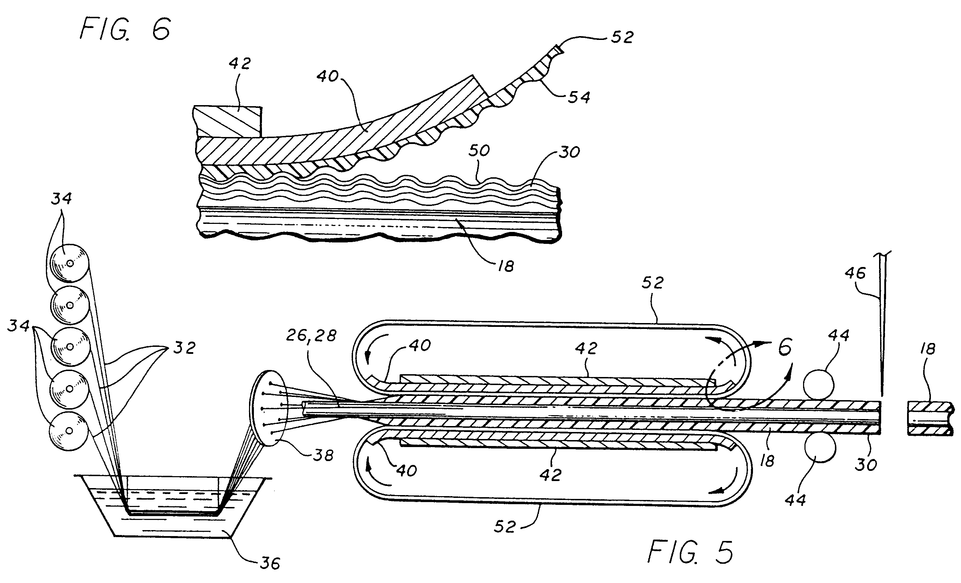

The load-bearing rod 18 is manufactured in a pultrusion process (schematically illustrated in FIGS. 5 and 6), and includes alternating sections of lightweight filler core 26 and reinforcing core 28 surrounded by a cured fiber-resin jacket 30. The reinforcing core 28 is preferably located within the fiber-resin jacket 30 at those points where the greatest flexural stresses on the tool handle 10 are anticipated. The lightweight filler core sections 26 extend through the remainder of the load-bearing rod 18 to minimize the weight of the tool handle 10.

The external surface of the reinforcing core 28 and a portion of the external surface of the lightweight filler core 26 are corrugated to permit the fiber-resin jacket 30 to be key-locked to the cores. Similarly, the external surface of the fiber-resin jacket 30 is also corrugated along at least a portion of its length to permit the reinforcing tip 20 and/or the grip 22 to be key-locked to the load-bearing rod 18. By key-locking facing laminate portions of the tool handle 10 in the manner shown, resistance to flexural stress-induced failure is significantly increased. It has been found that a composite tool handle 10 utilizing key-locks between adjacent layers of materials are far less likely to fail than tool handles manufactured in accordance with standard manufacturing processes. As illustrated best in FIGS. 2 and 6, the corrugations provided on the cores 26 and 28, and on the exterior surface of the fiber-resin jacket 30 are sinusoidal in shape. In this configuration, the typical corrugation is approximately 28,58 mm (1.125 inch) long and approximately 0,762 mm (0.030 inch) deep. The present invention, however, is not limited to this specific type of corrugation, but includes various types of corrugations which permit adjoining layers of the tool handle to be key-locked together.

The composite tool handle 10 is manufactured in accordance with a novel pultrusion process illustrated schematically, in part, in FIGS. 5 and 6. More specifically, to manufacture the load-bearing rod 18, a fiber material 32 is drawn off a series of spools or bales 34, then passed through a resin bath 36, and through a carding disc 38 into a die tube 40 where the fibers surround alternating sections of the lightweight filler and reinforcing cores 26 and 28. The fibers 32 are pulled through the die tube 40, and are heated and cured about the cores 26 and 28 by a conventional conduction heater or a microwave heating element 42, which surrounds the die tube. The cured rod 18 is pulled out of the die tube 40 by tractor-type pullers 44 and cut into the desired length by a conventional cutting device 46.

Preferably, the reinforcing core 28 and at least a portion of the lightweight filler core 26 have corrugations 48 formed into their respective external surfaces prior to being drawn through the die tube 40. The resin coated fibers 32, which when cured form the fiber-resin jacket 30, fill-in the spacing between adjacent corrugations to key-lock the fiber-resin jacket 32 to the cores 26 and 28. In order to create corrugations 50 on the external surface of the fiber-resin jacket 30, a continuous mold insert belt 52 is fed into the die tube 40 with the resin coated fibers 32 and travels through the die tube simultaneously with the cores and the resin coated fibers. The mold insert belt 52 includes a non-skid backing to permit it to slide easily along the surfaces of the die tube 40, and has a facing surface 54 which is nonreactive with the resin coated fibers forming the fiber-resin jacket 30. Under some conditions, it may be desirable to treat the facing surface 54 of the mold insert belt 52 with a release agent to ensure that the belt is easily separated from the fiber-resin jacket 30 of the load-bearing rod 18 as it exits the die tube 40 (see FIG. 6).

A load-bearing, rod 18 manufactured as described in connection with FIGS. 5 and 6 has significantly greater resistance to flexural stresses imposed thereon than similar load-bearing rods which do not have the facing laminate portions key-locked together. Provision of cores 26 and 28 having external corrugations ensures that the fiber-resin jacket 30 will be key-locked to the cores. The use of the continuous mold insert belt 52 provides external corrugations on the fiber-resin jacket 30, which permits a secondary jacket comprising the reinforcing tip 20 and the grip 22 to be molded thereon in a manner which key-locks each to the load-bearing rod 18.

As mentioned previously, the reinforcing tip is molded over the front end of the load-bearing rod 18 and is configured for insertion into the socket 14 of the shovel blade 16. The reinforcing tip 20 should be highly resistant to the bending stresses exerted upon the shovel handle 10 at its attachment to the shovel blade 16, and preferably is formed of a glass-filled nylon material. The grip 22 is preferably molded into a desirable shape from any material which is strong and yet comfortably handled by a user. The grip 22 primarily serves as a convenient surface by which the user can grasp the tool handle 10. When key-locked to the load-bearing rod 18, however, it does provide increased strength to the tool handle 10 rearwardly of the reinforcing tip 20.

Exceptional test results have been achieved by employing the method and apparatus of the present invention. The tool handle 10 provides significantly increased tensile and flexural strength without increasing the weight of the handle, and the manufacturing process permits use of low-cost fiber and resin materials, thus minimizing the costs of manufacture. From the foregoing it will be appreciated that cross-fibers are not necessary to increase the interlaminar and hoop strength of the tool handle 10, but rather the advantages of the present invention, and the significant increase in flexural strength of the tool handle 10, can be achieved while utilizing unidirectional fibers during a pultrusion process. By providing corrugations 48 and 50 on the external surfaces of the cores 26 and 28 and the fiber-resin jacket 30, which permit key-locking together of the facing layers of the composite tool handle 10, the handle's resistance to shear failure through the resin perpendicular to the applied load is significantly greater in comparison with prior composite tool handles

Although a particular embodiment of the invention has been described in detail for purposes of illustration, various modifications may be made without departing from the scope of the invention. Accordingly, the invention is not to be limited, except as by the appended claims.

## Claims

1. A composite tool handle for garden-type tools such as shovels, hoes, rakes, forks and the like, said handle comprising:
a core (26,28) having an external surface; and
a fiber-resin jacket (30) formed around the core to securely position and hold the core within the jacket, wherein the inner surface of the jacket conforms to the core external surface to key-lock the jacket to the core,
and wherein the core includes a lightweight filler section (26 and a relatively strong reinforcing section (28), the lightweight and reinforcing sections extending alternately longitudinally along the length of the tool handle (10), and wherein the reinforcing section (28) is located at a portion of the handle that is intended to withstand greater stress than the remainder of the handle,
characterized in that
the external surfaces of the cores (26, 28) facing the cured fiber-resin jacket and the internal surface of the cured fiber-resin jacket (30) have corrugations (48) along at least a portion of their length.

2. A handle as set forth in claim 1, wherein the corrugated external surface of the core has a sinusoidal configuration and wherein each corrugation is about 0,762mm (0.030 inch) deep and about 28,58mm (1.125 inch) apart.

3. A handle as set forth in claim 1, wherein the fiber-resin jacket includes a corrugated external surface along at least a portion of its length, and a secondary jacket is molded to the fiber-resin jacket over the corrugated external surface thereof, wherein the inner surface of the secondary jacket conforms to the corrugated external surface of the fiber-resin jacket to key-lock the secondary jacket to the fiber-resin jacket.

4. A handle as set forth in claim 3, wherein the secondary jacket includes a grip molded onto the fiber-resin jacket.

5. A handle as set forth in claim 3, wherein the secondary jacket includes a reinforcing adapter molded onto the fiber-resin jacket to strengthen the handle at its attachment to a tool head, and further including a grip molded onto the fiber-resin jacket adjacent to the reinforcing tip.

6. A handle as set forth in claim 3, wherein the corrugated portion of the external surface of the fiber-resin jacket has a sinusoidal configuration, and wherein each sine wave corrugation is about 0,762mm (0.030 inch) deep and about 28,58 mm (1.125 inch) apart.

7. A process for manufacturing the composite tool handle of claim 1 comprising the steps of:
feeding the core (26, 28) as defined in claim 1 into a pultrusion die tube (40); surrounding said core with resin coated fibers (32); pulling the core surrounded by the resin coated fibers (32) around the core (26,28) within the pultrusion die tube to form a fiber resin jacket (30); inserting a continuous mold insert belt (52) having a mold face (54) defined by a corrugated shape into the die tube (40) at a position disposed between an inner surface of the die tube and the resin-coated fibers (32) with the mold face (54) contacting the resin-coated fibers, whereby the continuous mold insert belt is drawn through the die tube with the resin coated fibers and the core.

8. A process according to claim 7, characterized by the step of curing the resin-coated fibers (32) upon passage through the die tube (40) to form the fiber-resin jacket (30) conforming to the core (26, 28), and the jacket having an external surface conforming to the mold face (54) on the external mold member (52), the external mold member being removable from the jacket at an exit end of the die tube.

9. A process according to claim 8, characterized in that the external mold member (52) comprises at least one mold insert belt.

10. A process according to claim 9, characterized in that the mold insert belt (52) is formed in a continuous loop.

11. A process according to any of claims 7 through 10, characterized by the step of molding a secondary jacket (20, 22) onto the fiber-resin jacket (30) over the external surface thereof, whereby an inner surface of the secondary jacket conforms to the external surface of the fiber-resin jacket to key-lock the secondary jacket to the fiber-resin jacket.

12. A process according to claim 11, characterized in that the secondary jacket includes a reinforcing tip (20) molded onto the fiber-resin jacket (30) to strengthen the handle (10) at its attachment to a tool head.

13. A process according to either claim 11 or claim 12, characterized in that the secondary jacket includes a grip (22) molded onto the fiber-resin jacket (30) adjacent to the reinforcing tip (20).

## Patentansprüche

1. Verbundstiel für Gartenwerkzeuge wie Schaufeln, Hakken, Rechen, Forken und dergl. mit
einem Kern (26, 28) mit einer Außenfläche und
einem um den Kern herum ausgebildeten Ummantelung (30) aus Faser-Harz-Material, um den Kern in der Ummantelung in der Sollage festzuhalten, wobei die Innenfläche der Ummantelung der Außenfläche des Kerns angepaßt und mit ihr formschlüssig verbunden ist, und wobei
der Kern einen Füllstoffabschnitt (26) niedrigen Gewichts sowie einen Verstärkungsabschnitt (28) verhältnismäßig hoher Stärke aufweist, die einander abwechselnd sich entlang der Länge des Werkzeugstiels (10) erstrecken, und der Verstärkungsabschnitt (28) sich in einem Teil des Stiels befindet, der größeren Belastungen als der Rest des Stiels widerstehen muß,
**dadurch gekennzeichnet,** daß
die Außenflächen der Kerne (26, 28) der Ummantelung aus gehärteten Faser-Harz-Material zugewandt sind und die Innenfläche der Ummantelung (30) aus gehärtetem Faser-Harz-Material über mindestens einen Teil ihrer Länge Wellungen (48) enthält.

2. Stiel nach Anspruch 1, bei dem die gewellte Außenfläche des Kerns sinusförmig gestaltet ist und die Wellen ca. 0,762 mm (0.030 inch) tief und ca. 28,58 mm (1.125 inch) beabstandet sind.

3. Stiel nach Anspruch 1, bei dem die Ummantelung aus Faser-Harz-Material über mindestens einen Teil ihrer Länge eine gewellte Außenfläche aufweist und eine sekundäre Ummantelung auf die gewellte Außenfläche der Faser-Harz-Ummantelung aufgeformt ist, wobei die Innenfläche der sekundären Ummantelung der gewellten Außenfläche der Faser-Harz-Ummantelung angepaßt ist derart, daß ein Formschluß der sekundären mit der Faser-Harz-Ummantelung entsteht.

4. Stiel nach Anspruch 3, bei dem die sekundäre Ummantelung eine Griffläche aufweist, die auf die Faser-Harz-Ummantelung aufgeformt ist.

5. Stiel nach Anspruch 3, bei dem die sekundäre Ummantelung einen Verstärkungsadapter aufweist, der auf die Faser-Harz-Ummantelung aufgeformt ist, um den Stiel an seinem Übergang zu einem Werkzeugkopf zu verstärken, und weiterhin an der Spitze der Verstärkung auf die Faser-Harz-Ummantelung ein Griff aufgeformt ist.

6. Stiel nach Anspruch 3, bei dem der gewellte Teil der Außenfläche der Faser-Harz-Ummantelung sinusförmig gewellt ist und die Sinuswellen jeweils ca. 0,762 mm (0.030 inch) tief und ca. 28,58 mm (1.125 inch) beabstandet sind.

7. Verfahren zum Herstellen des Verbund-Werkzeugstiels nach Anspruch 1, bei dem man
den Kern (26, 28) nach Anspruch 1 in ein Pultrusion-Ziehrohr (40) einführt, den Kern mit harzbeschichteten Fasern (32) umgibt, den mit den harzbeschichteten Fasern (32) umgebenen Kern (26, 28) in das Pultrusion-Ziehrohr zieht, um eine Faser-Harz-Ummantleung (30) auszubilden, einen kontinierlichen Form-Einsetzriemen (52) mit einer gewellten Formfläche (54) an einer Stelle zwischen der Innenfläche des Ziehrohrs und den harzbeschichteten Fasern (32) in das Ziehrohr (40) einführt, wobei die Formfläche (54) die harzbeschichteten Fasern kontaktiert und der kontinuierliche Form-Einsetzriemen mit den harzbeschichteten Fasern und dem Kern zusammen durch das Ziehrohr gezogen wird.

8. Verfahren nach Anspruch 7, **dadurch gekennzeichnet,** daß die harzbeschichteten Fasern (32) beim Durchgang durch das Ziehrohr (40) gehärtet werden, um die dem Kern (26, 28) angepaßte Faser-Harz-Ummantelung (30) auszubilden und ihr eine der Formfläche (54) des äußeren Formelement (52) entsprechend Außenfläche zu erteilen, wobei das äußere Formelement am Ausgang des Ziehrohrs von der Ummantelung abnehmbar ist.

9. Verfahren nach Anspruch 8, **dadurch gekennzeichnet,** daß das exerne Formelement (52) mindestens einen Form-Einsetzriemen aufweist.

10. Verfahren nach Anspruch 9, **dadurch gekennzeichnet,** daß der Form-Einsetzriemen (52) zu einer kontinuierlichen Schleife ausgebildet ist.

11. Verfahren nach einem der Ansprüche 7 bis 10, **dadurch gekennzeichnet,** daß man auf die Faser-Harz-Ummantelung (30) außen eine sekundäre Ummantelung (20, 22) aufformt, wobei eine Innenfläche der sekundären Ummantelung in der Gestalt der Außenfläche der Faser-Harz-Ummantelung entspricht, um die sekundäre formschlüssig mit der Faser-Harz-Ummantelung zu verbinden.

12. Verfahren nach Anspruch 11, **dadurch gekennzeichnet,** daß die sekundäre Ummantelung eine Verstärkungsspitze (20) aufweist, die auf die Faser-Harz-Ummantelung (30) aufgeformt wird, um den Stiel (10) am Übergang zu einem Werkzeugkopf zu verstärken.

13. Verfahren nach Anspruch 11 oder 12, **dadurch gekennzeichnet,** daß die sekundäre Ummantelung einen Griff (22) aufweist, der angrenzend an die Verstärkungsspitze (20) auf die Faser-Harz-Ummantelung (30) aufgeformt wird.

## Revendications

1. Manche d'outil composite pour outils du type jardinage, tels que des pelles, houes, râteaux, fourches et analogues, ledit manche comprenant :
une âme (26, 28) ayant une surface externe ; et
une gaine (30) en fibre-résine, formée autour de l'âme pour positionner et retenir solidement l'âme à l'intérieur de la gaine, la surface interne de la gaine épousant la surface externe de l'âme pour verrouiller la gaine par rapport à l'âme,
et l'âme comprenant une section de remplissage légère (26) et une section de renforcement (28) relativement solide, les sections légère et de renforcement s'étendant longitudinalement en alternance le long de la longueur du manche d'outil (10), et la section de renforcement (28) étant placée dans une partie du manche qui est conçue pour résister à des plus grandes contraintes que le reste du manche, caractérisé en ce que
les surfaces externes des âmes (26, 28) qui regardent vers la gaine en fibre-résine durcie et la surface interne de la gaine (30) en fibre-résine durcie ont des ondulations (48) le long d'au moins une partie de leur longueur.

2. Manche selon la revendication 1, dans lequel la surface externe ondulée de l'âme à une configuration sinusoïdale, et dans lequel chaque ondulation a une profondeur d'environ 0,762 mm (0,030 pouce) et un écartement mutuel d'environ 28,58 mm (1,125 pouce).

3. Manche selon la revendication 1, dans lequel la gaine en fibre-résine comprend une surface externe ondulée le long d'au moins une partie de sa longueur, et une gaine secondaire est moulée sur la gaine en fibre-résine, par dessus la surface externe ondulée de cette gaine, la surface interne de la gaine secondaire épousant la surface externe ondulée de la gaine en fibre-résine pour verrouiller la gaine secondaire par rapport à la gaine en fibre-résine.

4. Manche selon la revendication 3, dans lequel la gaine secondaire comprend une partie de prise moulée sur la gaine en fibre-résine.

5. Manche selon la revendication 3, dans lequel la gaine secondaire comprend un adaptateur de renforcement moulé sur la gaine en fibre-résine pour renforcer le manche au droit de sa fixation sur une tête d'outil, et comprenant en outre une partie de prise moulée sur la gaine en fibre-résine dans la position adjacente à l'embout de renforcement.

6. Manche selon la revendication 3, dans lequel la partie ondulée de la surface externe de la gaine en fibre-résine présente une configuration sinusoïdale et dans lequel chaque ondulation sinusoïdale a une profondeur d'environ 0,762 mm (0,030 pouce) et un écartement mutuel d'environ 58,58 mm (1,125 pouce).

7. Procédé de fabrication du manche composite pour outils selon la revendication 1, comprenant les phases consistant à :
introduire l'âme (26, 28) telle que définie à la revendication 1 dans un tube filière d'extrusion-traction (40) ; envelopper ladite âme de fibres (32) revêtues de résine ; tirer l'âme entourée de fibres (32) revêtues de résine autour de l'âme (26, 28) dans le tube de filière d'extrusion-traction pour former une gaine (30) en fibre-résine ; insérer une courroie (52) d'insertion de moule continue ayant une face de moulage (54) définie par une forme ondulée dans le tube filière (40), dans une position disposée entre la surface interne du tube filière et les fibres (32) revêtues de résine, avec la face de moulage (54) en contact avec le fibres revêtues de résine, de sorte que la courroie d'insertion de moule continue est tirée à travers le tube filière avec les fibres revêtues de résine et l'âme.

8. Procédé selon la revendication 7, caractérisé par les phases consistant à durcir les fibres (32) revêtues de résine à leur passage à travers le tube filière (40) pour former la gaine (30) en fibre-résine qui épouse l'âme (26, 28), et la gaine ayant une surface externe qui épouse la face de moulage (54) de l'élément de moule extérieur (52), l'élément de moule extérieur pouvant être séparé de la gaine à une extrémité de sortie dudit tube filière.

9. Procédé selon la revendication 8, caractérisé en ce que l'élément de moule extérieur (52) comprend au moins une courroie d'insertion de moule.

10. Procédé selon la revendication 9, caractérisé en ce que la courroie d'insertion de moule (52) est mise sous la forme d'une boucle continue.

11. Procédé selon une quelconque des revendications 7 à 10, caractérisé par la phase consistant à mouler une gaine secondaire (20, 22) sur la gaine (30) en fibre-résine par-dessus sa surface externe, de sorte que la surface interne de la gaine secondaire épouse la surface externe de la gaine en fibre-résine pour verrouiller la gaine secondaire par rapport à la gaine en fibre-résine.

12. Procédé selon la revendication 11, caractérisé en ce que la gaine secondaire comprend un embout de renforcement (20) moulé sur la gaine (30) en fibre-résine pour renforcer le manche (10) au niveau de sa fixation sur la tête de l'outil.

13. Procédé selon la revendication 11 ou la revendication 12, caractérisé en ce que la gaine secondaire comprend une partie de prise (22) moulée sur la gaine (30) en fibre-résine dans la région adjacente à l'embout de renforcement (20).
